# FASCICULE DE BREVET EUROPEEN

(11) **EP 2 379 445 B1**
(45) Date de publication et mention de la délivrance du brevet: **26.06.2013**
(21) Numéro de dépôt: 09805721.9
(22) Date de dépôt: 17.12.2009
(51) Int. Cl.: C01B 3/34, B01D 19/00, C02F 9/00

(54) **PROCEDE DE VALORISATION DE L'EVENT D'UN DE-AERATEUR ASSOCIE A UNE PRODUCTION DE GAZ DE SYNTHESE ET INSTALLATION POUR SA MISE EN OEUVRE**
VERFAHREN ZUR VEREDELUNG DES GASGEMISCHS AUS EINER MIT DER HERSTELLUNG EINES SYNTHESEGASES ASSOZIIERTEN ENTLÜFTUNGSVORRICHTUNG UND ANLAGE DAFÜR
METHOD FOR THE UPGRADING OF THE GAS MIXTURE FROM A DEAERATOR ASSOCIATED WITH THE PRODUCTION OF A SYNTHESIS GAS, AND PLANT FOR IMPLEMENTING THE SAME

(30) Priorité: 22.12.2008 FR 0858960
(43) Date de publication de la demande: 26.10.2011
(73) Titulaire: L'Air Liquide Société Anonyme pour l'Etude et l'Exploitation des Procédés Georges Claude, 75007 Paris (FR)
(72) Inventeur: MARTY, Pascal, F-94360 Bry sur Marne (FR); VICTOR, Marie-Pascal, F-75018 Paris (FR); BRIGLIA, Alain, F-49140 Corze (FR)
(74) Mandataire: Conan, Philippe Claude
(86) Numéro de dépôt international: PCT/FR2009/052583
(87) Numéro de publication internationale: WO 2010/072948

(56) Documents cités:
- EP-A- 0 349 164
- FR-A- 2 418 813
- US-A1- 2005 288 381

## Description

La présente invention est relative à un procédé et une installation pour le traitement de l'évent d'un dé-aérateur d'un procédé de production de vapeur associé à un procédé de production de gaz de synthèse par reformage d'hydrocarbures.

La présente invention concerne en particulier un procédé de génération d'un gaz de synthèse H₂/CO par reformage de méthane (ou autres charges d'hydrocarbures de type Naphta, fioul, méthanol...) à la vapeur (SMR) ou par reformage auto-thermique (ATR).

La production de gaz de synthèse est en général associée à une production de vapeur, laquelle fait elle-même appel à un procédé de dé-aération.

Lors de la production de gaz de synthèse, on génère en effet un mélange de gaz contenant essentiellement de l'hydrogène, du monoxyde de carbone, du dioxyde de carbone, de l'eau ainsi que du méthane, ce mélange étant appelé gaz de synthèse.

Le gaz de synthèse peut être produit par différentes méthodes. On citera notamment le reformage de méthane à la vapeur (steam methane reforming ou SMR en langue anglaise), le reformage auto-thermique (autothermic reforming ou ATR en langue anglaise), l'oxydation partielle catalytique ou non (partial oxidation ou POX en langue anglaise), ainsi que le reformage utilisant un reformeur catalytique membranaire, ces différentes méthodes de production de gaz de synthèse pouvant être combinées entre elles et/ou combinées avec un reformage de type GHR (gaz heated reforming en langue anglaise). Elles peuvent aussi être complétées par une réaction de déplacement (ou shift en langue anglaise) destinée à diminuer la production de CO au profit d'une production accrue d'H₂ et de CO₂. Quelle que soit la méthode utilisée, le gaz de synthèse est produit à haute température, en général comprise entre 600 et 1000° C.

Lors de la génération du gaz de synthèse, différents types de réaction sont mis en jeu, toujours à température élevée. Certaines réactions sont endothermiques et requièrent des quantités importantes de chaleur, d'autres sont exothermiques de sorte que des quantités de chaleur importantes sont produites, via les fluides sortants (gaz de synthèse, fumées).

De grandes quantités de chaleur doivent ainsi être évacuées tant du produit obtenu, c'est-à-dire du syngas, afin d'abaisser suffisamment sa température pour pouvoir le traiter, que des gaz de combustion.

Afin de valoriser cette chaleur disponible et pour répondre à des besoins en vapeur existants sur le site, ou à proximité, on associe fréquemment de la fourniture de vapeur d'eau en quantité variable, à titre de produit secondaire, à une unité de production de gaz de synthèse.

Cette vapeur provient au moins en partie de l'eau contenue dans le gaz de synthèse - appelée aussi condensats de procédés - qui est récupérée et recyclée. La vapeur peut aussi être produite à partir d'eau extérieure au procédé, en général de l'eau déminéralisée. La quantité de chaleur fournie par le procédé est telle qu'elle permet en général de produire un supplément de vapeur par rapport aux besoins du procédé. On peut ainsi exporter de la vapeur vers un ou plusieurs clients.

Souvent, les clients requièrent une vapeur de grande qualité, c'est-à-dire présentant des concentrations basses en impuretés telles que des gaz dissous comme de l'oxygène, du dioxyde de carbone, de l'ammoniac ou autres, ou des contaminants liquides comme du méthanol, de l'acide formique, des amines ou autres. C'est notamment le cas lorsque la vapeur est destinée à être exportée à l'extérieur du procédé.

En particulier, de l'eau destinée à alimenter des chaudières doit être dé-oxygénée pour éliminer l'oxygène dissous présent à des teneurs de l'ordre de la saturation (9 à 10 ppm) jusqu'à pratiquement zéro avant de pouvoir être utilisée dans une chaudière. Cette opération est nécessaire en raison du comportement corrosif de l'oxygène sur les éléments métalliques tant des chaudières que des tuyaux.

Par ailleurs lors de la production du gaz de synthèse, des réactions secondaires ont aussi lieu (par exemple, mais non exclusivement lors des étapes catalysées) générant des impuretés telles que l'ammoniac, le méthanol, l'acide formique et des amines, lesquelles impuretés sont solubles dans l'eau. L'eau contenant les impuretés est éliminée du gaz produit par condensation, et celles-ci se retrouvent donc dans l'eau condensée destinée à être recyclée. Cette eau devient ainsi foyer d'une contamination croissante en au moins les contaminants cités ci-dessus. Ces impuretés, ou au moins certaines d'entre elles, peuvent être nuisibles pour des catalyseurs de reformage. Il est donc aussi nécessaire de purifier cette eau avant de la réinjecter dans le système de génération de vapeur.

C'est ainsi que les installations produisant du gaz de synthèse et éventuellement de la vapeur d'eau pour l'exportation, comportent de façon classique des équipements additionnels destinés à traiter l'eau afin de pouvoir respecter les exigences de pureté. Parmi ces équipements, on trouve en particulier les dé-aérateurs destinés à éliminer les éléments nuisibles gazeux solubles dans l'eau, les principaux d'entre eux étant l'oxygène, le dioxyde de carbone, et l'ammoniaque dissous dans l'eau.

Dans une unité de génération de gaz de synthèse, l'O₂ dissous provient notamment de l'eau déminéralisée et le CO₂ dissous des condensats de procédé qui y sont recyclés, mais on trouvera aussi d'autres impuretés, ainsi que NH₃, CH₃OH, et des acides organiques parfois dissous dans les condensats de procédé. L'opération de dé-aération s'effectue par stripage de l'eau à traiter à contre-courant par de la vapeur d'eau propre.

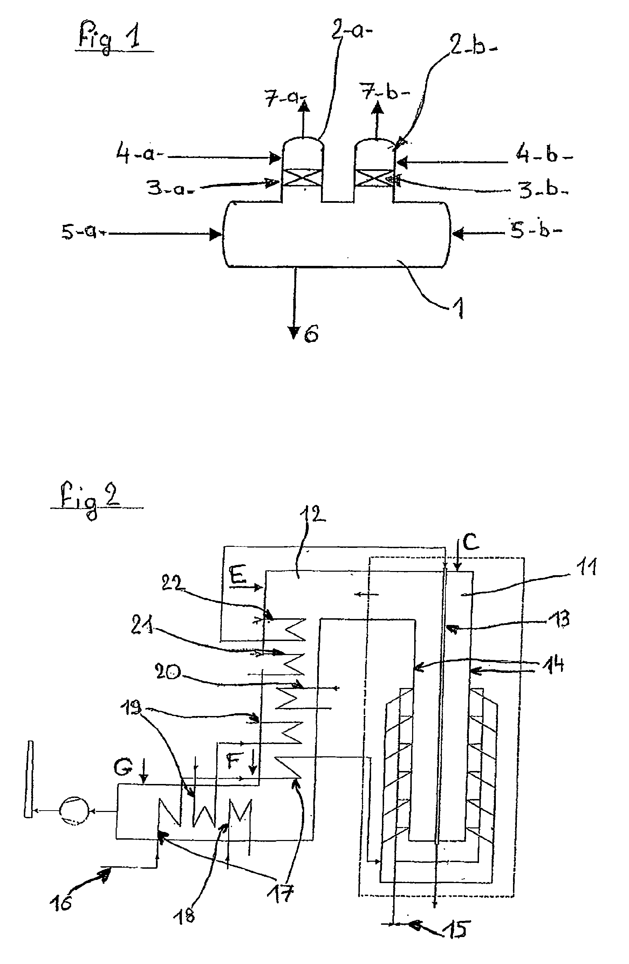

Les dé-aérateurs sont connus en tant que tels, leur fonctionnement sera décrit par la suite, brièvement, en liaison avec la figure 1.

L'élimination des gaz dissous est réalisée dans les stripeurs. Ceux-ci se présentent sous la forme de petites colonnes de stripage (ou dômes) munies de plateaux ou de garnissages qui sont installées sur la partie supérieure du dé-aérateur. La vapeur d'eau utilisée pour le stripage est classiquement générée au niveau du dé- aérateur lui-même, mais elle pourra aussi provenir d'une source extérieure au dé-aérateur.

Les évents des stripeurs sont en général dirigés vers l'atmosphère qui s'en trouve pollué. Les impuretés présentes dans l'eau et entrainées par la vapeur lors du stripage sont évacuées via l'évent. L'envoi de ces impuretés à l'air est préjudiciable, il est à la fois désagréable (odeurs), dangereux pour les personnes passant à proximité, et nuisible à l'environnement.

Une telle solution est notamment décrite dans les documents EP 0 349 164 A et US 2005/288381 A1.

Le document FR 2 418 813 A divulgue quant à lui un procédé et une installation de purification de condensat produit dans une installation de gaz de synthèse [page1, lignes1-4]. Le condensat contient des impuretés dissoutes dans l'eau [page1, lignes16 -21]. Le condensat peut être réutilisé pour former de la vapeur après une purification au cours de laquelle les impuretés sont éliminées. Une telle purification a lieu dans une colonne de dégazage avec une partie de la vapeur d'eau à utiliser dans le procédé de production de gaz de synthèse. Pendant la purification, les impuretés volatiles sont entraînées et éliminées du condensat et s'échappent avec la vapeur d'eau. Le flux de vapeur contenant des impuretés est retourné au procédé de génération de gaz de synthèse [page3, ligne25 - page 4, ligne 16] où il est mélangé avec le reste de la vapeur d'eau qui va être envoyée vers le réacteur de reformage et qui est à 385°C [page 4, ligne 33 - page 5, ligne 17].

Or, la Demanderesse a découvert qu'il était possible d'utiliser le procédé même de génération du gaz de synthèse pour traiter ces évents et les envoyer à l'atmosphère avec les fumées émises lors de la génération de gaz de synthèse, le traitement consistant à injecter l'évent dans l'unité même de génération de gaz de synthèse, dans certaines zones de chauffage et/ ou de combustion. En fonction de la localisation choisie pour l'injection, de la température en ce point, et des impuretés considérées, soit on diluera l'impureté dans les fumées (pour une température comprise entre 100°C à 400°C en fonction de la nature de l'impureté considérée) ou on la décomposera (400°C à 1000°C en fonction de la nature de l'impureté considérée).

Par « évent », on entend, selon le contexte, soit la conduite permettant l'évacuation du mélange gazeux essentiellement constitué par la vapeur chargée d'impuretés produite par le stripeur, soit le mélange gazeux lui-même. Dans le cadre de l'invention, il s'agira en général du mélange gazeux. Si l'évent doit être compris comme étant la conduite d'évacuation du mélange, le sens en sera précisé, à moins que le contexte ne le rende évident à la lecture du texte.

L'invention contribue ainsi à la solution du problème de pollution habituellement généré par les évents des dé-aérateur(s) d'eau compris dans le(s) circuit(s) de production de vapeur associé(s) à un procédé de production de gaz de synthèse.

Par procédé de production de gaz de synthèse associé, au sens de l'invention, on entend aussi bien un procédé de production de gaz de synthèse par reformage d'une charge hydrocarbonée légère à la vapeur (SMR), qu'un procédé de production par reformage auto-thermique, étant entendu que dans ce dernier cas, le procédé est compris comme contenant aussi l'étape de préchauffage de la charge précédent l'entrée dans le reformeur auto-thermique lui-même.

Ainsi, le procédé selon l'invention est un Procédé P_{A} de traitement de l'évent d'un dé-aérateur d'un procédé P_{B} de production de vapeur associé à un procédé Pc de production de gaz de synthèse par reformage d'hydrocarbures, pour partie mis en oeuvre dans un reformeur présentant une zone de convection et une zone de radiation et dans lequel la chaleur est apportée par la combustion d'un fioul alimenté via un réseau basse pression en présence d'air de combustion, ledit procédé P_{A} comprenant les étapes de :
a) alimentation d'un circuit de production de vapeur par au moins un flux d'eau,
b) stripage d'impuretés gazeuses dissoutes présentes dans l'eau alimentant l'étape a) à contre courant d'un flux de vapeur d'eau propre avec production d'au moins :
   - un flux d'eau dé-aérée,
   - un évent, c'est-à-dire un flux gazeux contenant tout ou partie des impuretés gazeuses présentes dans l'eau alimentant l'étape a),
dans lequel tout ou partie du flux gazeux de l'évent issu de l'étape de stripage b) est envoyé vers au moins une étape du procédé Pc au cours de laquelle au moins des fluides sont à une température T comprise entre 100°C et 1 000°C, pour y être mélangé avec au moins un fluide choisi parmi lesdits fluides,
caractérisé en ce qu'il y est mélangé avec au moins un flux gazeux de pression suffisamment basse pour qu'il ne soit pas utile de comprimer ledit évent recyclé avant injection, ledit tout ou partie de l'évent étant recyclé dans le procédé Pc en au moins un emplacement dans la zone de convection du four et le dit flux gazeux de pression suffisamment basse étant constitué par les fumées de combustion.

L'intérêt du procédé est d'autant plus grand lorsqu'on l'applique aux évents d'une colonne de stripage traitant des condensats procédés qui contiennent des impuretés indésirables dans l'atmosphère, et en particulier de l'ammoniaque, généré dans un four de reformage à la vapeur lorsque la charge d'hydrocarbures traitée contient de l'azote, et qui pourra ainsi être soit dilué, soit décomposé à une température comprise entre 400°C et 1000°C.

Lorsque le syngas produit est traité dans un réacteur de shift (soit, lorsque la production de syngas comprend aussi une étape de transformation du syngas brut en syngas enrichi en H₂ selon la réaction CO + H₂O → CO₂ + H₂), du méthanol et des acides organiques sont générés dans le réacteur de shift. Ils sont présents dans les condensats de procédé issus du refroidissement du syngas produit, recyclés au dé-aérateur et présents dans l'évent du dé-aérateur. Ils seront de même que l'ammoniaque, dilués et/ou décomposés.

Avantageusement, l'eau alimentant l'étape a) du procédé provient pour tout ou partie du procédé de production de gaz de synthèse associé ; cependant, elle peut aussi provenir pour tout ou partie de sources extérieures au dit procédé.

Cependant, en présence d'ammoniaque dans les fumées, l'injection de l'évent dans les fumées est une variante du procédé particulièrement avantageuse. En fonction de la localisation de ces injections, l'ammoniaque sera, soit simplement dilué dans les fumées, soit contribuera à un traitement de NOx de type réduction sélective non catalytique des oxydes d'azote présents dans ces mêmes fumées.

Les équations prises en compte lors du procédé de NOx sont les suivantes :

2NO +4NH₃ + 2O₂ →3N₂ + 6H₂O

4NH₃ + 5O₂ → 4NO + H₂O

Ces deux réactions se produisent simultanément. Selon la température au point d'injection de l'ammoniaque, la teneur en NOx des fumées pourra être minimisée, avec une teneur résiduelle en NH₃, ou l'ammoniaque (NH₃) sera consommée, avec production de NO. Le point d'injection de l'évent dans les fumées sera judicieusement choisi de manière à convertir une quantité maximale d'ammoniaque tout en respectant la teneur de NOx admissible dans les fumées envoyées à l'atmosphère (en l'absence de réduction catalytique sélective).

Selon une variante de l'invention, le procédé Pc est un procédé de reformage auto-thermique dans lequel la charge hydrocarbonée est préalablement chauffée dans un four de préchauffe présentant une zone de combustion et une zone de convection avant d'entrer dans le reformeur auto-thermique lui-même.

Selon un deuxième aspect de la présente invention, celle-ci concerne également une installation de traitement de l'évent d'un dé-aérateur d'un procédé P_{B} de production de vapeur associé à un procédé P_{c} de production de gaz de synthèse par reformage d'hydrocarbures, comprenant au moins :
- un reformeur présentant :
   ● une zone de convection,
   ● une zone de radiation,
   ● des moyens d'alimentation en fioul via un réseau basse pression, et en air de combustion,
- un moyen d'alimentation d'un circuit de production de vapeur par au moins un flux d'eau,
- un dé-aérateur assurant le stripage d'impuretés gazeuses dissoutes présentes dans l'eau dudit flux alimentant l'étape a) à contre courant de vapeur d'eau propre avec au moins :
   ● un moyen d'alimentation en flux d'eau à dé-aérer,
   ● un moyen de production de vapeur propre apte au stripage,
   ● un moyen de sortie d'un flux d'eau dé-aérée,
   ● un moyen d'évacuation de l'évent,
caractérisé en ce qu'elle comprend des moyens d'injection de tout ou partie de l'évent provenant du dé-aérateur en au moins une localisation de la zone de convection du four de l'installation.

Ladite installation est avantageusement apte à la mise en oeuvre des procédés décrits ci-dessus.

De préférence, ladite installation de production de gaz de synthèse par reformage d'hydrocarbures comprend un four de reformage à la vapeur.

Selon une autre variante avantageuse, l'installation de reformage comprend un four de préchauffe dans lequel la charge hydrocarbonée destinée au reformage est chauffée préalablement à un reformage auto-thermique, elle est caractérisée en ce que ledit four de préchauffe comprend aussi des moyens d'injection de tout ou partie de l'évent issu du stripage en au moins un emplacement dans la zone de convection du four de préchauffe.

L'invention sera mieux comprise à l'aide des figures 1 et 2 données à titre illustratif, et non limitatif, dans lesquelles :
La figure 1 représente un schéma de dé-aérateur.
La figure 2 présente un schéma de reformeur à la vapeur sur lequel différents points d'injection d'évent selon l'invention sont reportés.

La figure 1 présente une vue d'un dé-aérateur classique à double stripeur apte à l'aération de deux types d'eau. On dédie plus souvent un stripeur pour chaque type d'eau à traiter, mais ce n'est toutefois pas obligatoire, ainsi que l'illustre la figure.

Le dé-aérateur se compose d'un ballon 1 muni de stripeurs 2 (ici 2-a- et 2-b-pour traiter 2 types d'eau). Ceux-ci se présentent sous la forme de petites colonnes de stripage (ou dômes) munies de plateaux ou de garnissages 3 -a- et 3-b- qui sont installées sur la partie supérieure du dé-aérateur. L'opération de dé-aération s'effectue par stripage d'eau à traiter 4-a-, généralement issue du procédé de production de gaz de synthèse, et 4-b-, généralement de l'eau déminéralisée, à contre-courant par de la vapeur d'eau propre. La vapeur d'eau utilisée pour le stripage est, soit une vapeur propre 5-b- (approximativement 100°C et pression atmosphérique), soit générée dans le ballon, muni d'un système de chauffage, à partir d'eau (retour CP) 5-a-. De l'eau de chaudière 6 débarrassée des impuretés légères est récupérée en partie basse du ballon 1. Les évents, 7-a- et 7-b-, flux gazeux constitués de vapeur d'eau contenant les impuretés stripées sont récupérés en haut des stripeurs.

La figure 2 illustre un reformeur de méthane à la vapeur (SMR) sur lequel différents points d'injection d'évent sont reportés. Le reformeur comprend une chambre de radiation 11 et une chambre de convection 12 ; la chambre de radiation 11 comprend des tubes de reformage 13 placés à mi-distance entre deux murs en réfractaire 14 supportant des brûleurs (non représentés). Les bruleurs sont alimentés en fioul via un réseau de fioul basse pression 15 et en air de combustion 16, préchauffé par passage(s) successifs 17 dans la chambre de convection 12 pour être chauffé par échange de chaleur indirect avec les fumées partiellement refroidies. Outre l'air de combustion, différents fluides sont couramment chauffés par passage dans la chambre de convection ; on peut citer par exemple l'eau de chaudière en 18, la charge alimentant le reformeur qui traverse plusieurs fois les fumées à différents niveaux de chaleur en 19, la vapeur surchauffée en 20, le mélange charge +vapeur en 21 et en 22. Ces différents passages de fluides se font à des températures de fumées comprises entre 100°C et 11000°C environ.

Différentes localisations de recyclage des évents sont repérées sur la figure par des flèches accompagnées de repères. Il est naturellement possible de prévoir plusieurs injections des évents dans le procédé, simultanées ou non.

Le recyclage de l'évent peut être réalisé à différents niveaux dans la zone de convection. En fonction de la localisation de ces injections, l'ammoniaque sera, soit simplement dilué dans les fumées, en G ou en F, soit contribuera à un traitement de NOx de type réduction sélective non catalytique des oxydes d'azote présents dans ces mêmes fumées, s'il est injecté en E.

Les impuretés sont ainsi décomposées sous l'effet de la chaleur, sans être brûlées ; cette réincorporation des impuretés dans le procédé n'a pas d'impact sur le déroulement du reformage dont elle ne modifie pas le système de combustion - puisque la réincorporation est réalisée en aval de la combustion -, elle n'a pas d'impact non plus sur la composition de la charge.

Exemple de « deNOx » par injection de l'évent dans la chambre de convection en un point du type E.

Conditions : Reformage à la vapeur d'un gaz naturel présentant une teneur en azote de 5% en volume ; la teneur en NH₃ dans l'évent est comprise entre 2 et 5kg/h selon la qualité su stripage des condensats de procédé.

Résultats concernant la teneur en NOx dans les fumées après un traitement de NOx utilisant l'évent :
- pour une injection de l'évent dans la chambre de convection en une localisation où la température est de l'ordre de 1040°C : la teneur résultante en NOx est de 120 à 150 ppm en poids dans les fumées ;
- pour une injection de l'évent dans la chambre de convection en une localisation où la température est de l'ordre de 880°c : la teneur résultante en NOx est de 30 à 60 ppm en poids dans les fumées.

On remarquera par ailleurs que les impuretés sont décomposées sous l'effet de la chaleur, sans être brûlées ; cette réincorporation des impuretés dans le procédé selon le procédé de l'invention n'a pas d'impact sur le déroulement du reformage dont elle ne modifie pas le système de combustion - puisque la réincorporation est réalisée en aval de la combustion -, elle n'a pas d'impact non plus sur la composition de la charge.

## Revendications

1. Procédé P_{A} de traitement de l'évent d'un dé-aérateur d'un procédé P_{B} de production de vapeur associé à un procédé P_{C} de production de gaz de synthèse par reformage d'hydrocarbures pour partie mis en oeuvre dans un reformeur présentant une zone de convection et une zone de radiation et dans lequel la chaleur est apportée par la combustion d'un fioul alimenté via un réseau basse pression en présence d'air de combustion, ledit procédé P_{A} comprenant les étapes de :
a) alimentation d'un circuit de production de vapeur par au moins un flux d'eau,
b) stripage d'impuretés gazeuses dissoutes présentes dans l'eau alimentant l'étape a) à contre courant d'un flux de vapeur d'eau propre avec production d'au moins :
- un flux d'eau dé-aérée,
- un évent, soit un flux gazeux contenant tout ou partie des impuretés gazeuses présentes dans l'eau alimentant l'étape a),
dans lequel tout ou partie du flux gazeux de l'évent issu de l'étape de stripage b) est envoyé vers au moins une étape du procédé P_{c} au cours de laquelle au moins des fluides sont à une température T comprise entre 100°C et 1 000°C pour y être mélangé avec au moins un fluide choisi parmi lesdits fluides,
**caractérisé en ce qu'**il y est mélangé avec au moins un flux gazeux de pression suffisamment basse pour qu'il ne soit pas utile de comprimer ledit évent recyclé avant injection, ledit tout ou partie de l'évent étant recyclé dans le procédé P_{c} en au moins un emplacement dans la zone de convection du four et ledit flux gazeux de pression suffisamment basse étant constitué par les fumées de combustion.

2. Procédé selon la revendication 1 dans lequel l'eau alimentant l'étape a) du procédé provient pour tout ou partie du procédé de production de gaz de synthèse associé.

3. Procédé selon la revendication 1 ou 2 dans lequel le procédé P_{C} de production de gaz de synthèse par reformage d'hydrocarbures est un procédé de reformage d'une charge d'hydrocarbonée en présence de vapeur d'eau dans un four de reformage à la vapeur.

4. Procédé selon la revendication 1 ou 2 dans lequel le procédé Pc est un procédé de reformage auto-thermique, dans lequel la charge hydrocarbonée est préalablement chauffée dans un four de préchauffe présentant une zone de combustion et une zone de convection avant d'entrer dans le reformeur auto-thermique lui-même.

5. Installation de traitement de l'évent d'un dé-aérateur d'un procédé P_{B} de production de vapeur associé à un procédé P_{c} de production de gaz de synthèse par reformage d'hydrocarbures, comprenant au moins :
- un reformeur présentant :
● une zone de convection,
● une zone de radiation,
● des moyens d'alimentation en fioul via un réseau basse pression, et en air de combustion,
- un moyen d'alimentation d'un circuit de production de vapeur par au moins un flux d'eau,
- un dé-aérateur assurant le stripage d'impuretés gazeuses dissoutes présentes dans l'eau dudit flux alimentant l'étape a) à contre courant de vapeur d'eau propre avec au moins :
● un moyen d'alimentation en flux d'eau à dé-aérer,
● un moyen de production de vapeur propre apte au stripage,
● un moyen de sortie d'un flux d'eau dé-aérée,
● un moyen d'évacuation de l'évent,
**caractérisée en ce qu'**elle comprend aussi des moyens d'injection de tout ou partie de l'évent provenant du dé-aérateur en au moins une localisation de la zone de convection du four de l'installation.

6. Installation selon la revendication 5 dans laquelle l'installation de production de gaz de synthèse par reformage d'hydrocarbures comprend un four de reformage à la vapeur.

7. Installation selon la revendication 5 dans laquelle l'installation de reformage comprend un four de préchauffe dans lequel la charge hydrocarbonée destinée au reformage est chauffée préalablement à un reformage auto-thermique, **caractérisée en ce que** ledit four de préchauffe comprend aussi des moyens d'injection de tout ou partie de l'évent issu du stripage en au moins un emplacement dans la zone de convection du four de préchauffe.

## Patentansprüche

1. Verfahren P_{A} zum Behandeln des Gasgemischs aus einer Entlüftungsvorrichtung eines Verfahrens P_{B} zum Herstellen von Dampf, assoziiert mit einem Verfahren P_{C} zum Herstellen eines Synthesegases durch Reformieren von Kohlenwasserstoffen, das teilweise in einem Reformer durchgeführt wird, der eine Konvektionszone und eine Strahlungszone aufweist, wobei die von der Verbrennung eines Heizöls eingebrachte Wärme über ein Niederdrucknetz in Gegenwart von Verbrennungsluft zugeführt wird, wobei das Verfahren P_{A} die folgenden Schritte umfasst:
a) Zuführen mindestens eines Wasserstroms in einen Kreislauf zum Herstellen von Dampf,
b) Strippen von gelösten gasförmigen Verunreinigungen, die in dem Wasser vorhanden sind, das in Schritt a) zugeführt wird, im Gegenstrom zu einem Strom aus sauberem Wasserdampf unter Herstellung von mindestens:
- einem Strom aus entlüftetem Wasser,
- einem Gasgemisch, d. h. einem gasförmigen Strom, der alle oder einen Teil der gasförmigen Verunreinigungen enthält, die in dem Wasser vorhanden sind, das in Schritt a) zugeführt wird,
wobei der gesamte oder ein Teil des gasförmigen Stroms des Gasgemischs aus dem Strippingschritt b) zu mindestens einem Schritt des Verfahrens P_{C} geschickt wird, in dessen Verlauf mindestens die Fluide eine Temperatur T im Bereich zwischen 100 ° C und 1.000 °C aufweisen, um dort mit mindestens einem Fluid, ausgewählt aus den genannten Fluiden, gemischt zu werden,
**dadurch gekennzeichnet, dass** es dort mit mindestens einem gasförmigen Strom gemischt wird, dessen Druck ausreichend niedrig ist, damit er nicht geeignet ist, das zurückgeführte Gasgemisch vor der Injektion zu komprimieren, wobei das gesamte oder ein Teil des Gasgemischs in das Verfahren P_{C} an mindestens einem Ort in der Konvektionszone des Ofens zurückgeführt wird und der gasförmige Strom mit ausreichend niedrigem Druck aus Rauchgasen besteht.

2. Verfahren nach Anspruch 1, wobei das Wasser, das in Schritt a) des Verfahrens zugeführt wird, ganz oder teilweise aus dem assoziierten Verfahren zum Herstellen eines Synthesegases stammt.

3. Verfahren nach Anspruch 1 oder 2, wobei das Verfahren P_{C} zum Herstellen von Synthesegas durch Reformieren von Kohlenwasserstoffen ein Verfahren zum Reformieren einer Kohlenwasserstoffbeschickung in Gegenwart von Wasserdampf in einem Dampfreformierungsofen ist.

4. Verfahren nach Anspruch 1 oder 2, wobei das Verfahren P_{C} ein Verfahren zum autothermen Reformieren ist, wobei die Kohlenwasserstoffbeschickung, bevor sie in den autothermen Reformer eingeleitet wird, in einem Vorerhitzerofen vorgeheizt wird, der eine Verbrennungszone und eine Konvektionszone aufweist.

5. Anlage zum Behandeln des Gasgemischs aus einer Entlüftungsvorrichtung eines Verfahrens P_{B} zum Herstellen von Dampf assoziiert mit einem Verfahren P_{C} zum Herstellen eines Synthesegases durch Reformieren von Kohlenwasserstoffen, die mindestens Folgendes umfasst:
- einem Reformer, aufweisend:
● eine Konvektionszone,
● eine Strahlungszone,
● Mittel zum Versorgen mit Heizöl über ein Niederdrucknetz und mit Verbrennungsluft,
- ein Mittel zum Zuführen mindestens eines Wasserstroms in einen Kreislauf zum Herstellen von Dampf,
- eine Entlüftungsvorrichtung, die das Strippen von gelösten gasförmigen Verunreinigungen gewährleistet, die in dem Wasser des Stroms vorhanden sind, der in Schritt a) zugeführt wird, im Gegenstrom mit einem Strom aus sauberem Wasserdampf, mit mindestens:
● einem Mittel zum Zuführen eines Stroms aus zu entlüftendem Wasser,
● einem Mittel zum Herstellen von sauberem Dampf, der für das Stripping geeignet ist,
● einem Mittel zum Ausleiten eines Stroms aus entlüftetem Wasser,
● einem Mittel zum Abführen des Gasgemischs, **dadurch gekennzeichnet, dass** sie auch Mittel zum Injizieren des gesamten oder eines Teils des Gasgemischs, das aus der Entlüftungsvorrichtung stammt, an mindestens einem Ort der Konvektionszone des Ofens der Anlage umfasst.

6. Anlage nach Anspruch 5, wobei die Anlage zum Herstellen eines Synthesegases durch Reformieren von Kohlenwasserstoffen einen Ofen zur Dampfreformierung umfasst.

7. Anlage nach Anspruch 5, wobei die Anlage zum Reformieren einen Vorerhitzererofen umfasst, in dem die Kohlenwasserstoffbeschickung, die zur Reformierung bestimmt ist, vor einer autothermen Reformierung erhitzt wird, **dadurch gekennzeichnet, dass** der Vorerhitzerofen auch Mittel zur Injektion des gesamten oder eines Teils des Gasgemischs aus dem Strippen an mindestens einem Ort in der Konvektionszone des Vorerhitzerofens umfasst.

## Claims

1. Process P_{A} for treating the vented gas mixture from a deaerator of a steam production process P_{B} associated with a hydrocarbon-reforming syngas production process P_{C} partly carried out in a reformer having a convection zone and a radiation zone and in which the heat is provided by the combustion of a fuel oil supplied via a low-pressure line in the presence of combustion air, said process P_{A} comprising the following steps:
a) supply of a steam production circuit with at least one stream of water; and
b) stripping of dissolved gaseous impurities present in the water supplying step a) countercurrently with a stream of clean steam with production of at least:
- a stream of deaerated water and
- a vented gas mixture, i.e. a gas stream containing all or some of the gaseous impurities present in the water supplying step a),
in which all or part of the gas stream of the vented gas mixture coming from the stripping step b) is sent to at least one step of the process P_{C} during which at least fluids are at a temperature T between 100°C and 1000°C in order to be mixed therein with at least one fluid chosen from said fluids,
**characterized in that** it is mixed therein with at least one gas stream of sufficiently low pressure for it to be not worthwhile compressing said recycled vented gas mixture before injection, said all or some of the vented gas mixture being recycled into the process P_{C} in at least one location in the convection zone of the furnace and said gas stream of sufficiently low pressure being formed by the combustion flue gas.

2. Process according to Claim 1, in which the water supplying step a) of the process comes entirely or partly from the associated syngas production process.

3. Process according to Claim 1 or 2, in which the hydrocarbon-reforming syngas production process P_{c} is a process for reforming a hydrocarbon feedstock in the presence of steam in a steam reforming furnace.

4. Process according to Claim 1 or 2, in which the process P_{C} is an autothermal reforming process in which the hydrocarbon feedstock is preheated in a preheat furnace having a combustion zone and a convection zone before entering the autothermal reformer itself.

5. Plant for treatment of the vented gas mixture from a deaerator of a steam production process P_{B} associated with a hydrocarbon-reforming syngas production process P_{C}, comprising at least:
- a reformer having:
● a convection zone,
● a radiation zone and
● means for supplying fuel oil, via a low-pressure line, and for supplying combustion air;
- a means for supplying a steam production circuit with at least one stream of water; and
- a deaerator for stripping dissolved gaseous impurities present in the water of said stream supplying step a) countercurrently with clean steam, with at least:
● a means for supplying a stream of water to be deaerated,
● a means for producing clean steam, suitable for stripping,
● a means for outputting a stream of deaerated water and
● a means for discharging the vented gas mixture,
**characterized in that** it also includes means for injecting all or part of the vented gas mixture coming from the deaerator into at least one location in the convection zone of the furnace of the plant.

6. Plant according to Claim 5, in which the hydrocarbon-reforming syngas production unit comprises a steam reforming furnace.

7. Plant according to Claim 5, in which the reforming unit comprises a preheat furnace in which the hydrocarbon feedstock intended for the reforming is heated prior to autothermal reforming, **characterized in that** said preheat furnace also includes means for injecting all or part of the vented gas mixture coming from the stripping stage into at least one location in the convection zone of the preheat furnace.
